# FASCICULE DE BREVET EUROPEEN

(11) **EP 0 781 703 B1**
(45) Date de publication et mention de la délivrance du brevet: **13.10.1999**
(21) Numéro de dépôt: 96402883.1
(22) Date de dépôt: 24.12.1996
(51) Int. Cl.: B64B 1/66

(54) **Procédé d'amarrage au sol d'un ballon et infrastructure au sol pour la mise en oeuvre de ce procédé**
Bodenverankerungsverfahren für einen Ballon und Vorrichtung auf dem Boden dafür
Balloon ground anchoring method and ground infrastructure therefor

(30) Priorité: 29.12.1995 FR 9515888
(43) Date de publication de la demande: 02.07.1997
(73) Titulaire: AEROPHILE S.A., 60500 Chantilly (FR)
(72) Inventeur: Gobbi, Matthieu, 75116 Paris (FR); Giacomoni, Jérôme, 75116 Paris (FR)
(74) Mandataire: Desrousseaux, Grégoire Marie

(56) Documents cités:
- GB-A- J20 249
- GB-A- J21 040
- US-A- 1 358 325

## Description

La présente invention concerne un procédé d'amarrage au sol d'un ballon, ainsi qu'une infrastructure au sol pour la mise en oeuvre de ce procédé d'amarrage. Elle trouve plus particulièrement son application dans le maintien au sol d'un ballon captif, en cas de vents violents.

Les ballons captifs, contrairement aux ballons libres qui peuvent se déplacer d'un point géographique à l'autre, sont reliés au sol par un câble. Il est à ce jour connu d'utiliser de tels ballons captifs pour emmener dans les airs des passagers et leur donner un point de vue panoramique du lieu où est rattaché au sol le ballon captif. Un ballon captif comprend une enveloppe de sustentation gonflable avec un gaz plus léger que l'air, et une nacelle permettant l'embarquement des passagers. L'enveloppe de sustentation est reliée à un cadre de charge par l'intermédiaire de suspentes, la nacelle étant en outre suspendue à ce cadre de charge. Le rappel au sol du ballon captif se fait au moyen d'un câble qui est fixé au cadre de charge et qui s'enroule au sol sur un système de treuil permettant de commander la montée ou la descente du ballon captif.

Une fois la nacelle d'un ballon captif posée au sol, il est connu de fixer l'enveloppe du ballon captif au sol au moyen de haubans, alors que cette enveloppe est en sustentation, les suspentes reliant le tilet au cadre de charge étant tendues. Les haubans sont par exemple constitués par une pluralité de cordes ou câbles qui sont fixés à demeure sur le filet, et dont l'extrémité libre est destinée à être ancrée au sol par tout moyen approprié. S'agissant d'un ballon comportant une enveloppe de forme sphérique, les haubans seront de préférence régulièrement répartis sur toute la circonférence de l'enveloppe, au niveau de son équateur.

GB-A-21040 propose d'ancrer un ballon à nacelle suspendue en utilisant des pans de tissu dont une extrémité est fixée sur la nacelle au niveau du plan médian ou équateur. L'autre extrémité des pans de tissu est fixée au sol ou lestée par des pierres ou d'autres objets lourds. Une fois le ballon ancré, les pans de tissus forment une tente sous laquelle les aéronautes s'abritent.

US-A-1 358325 décrit un dispositif permettant de faire monter ou descendre une nacelle suspendue à un ballon, sans pour autant modifier la position du ballon. Un cadre supportant une poulie est accroché au ballon, et la nacelle est suspendue à la poulie du cadre.

GB-A-20249 décrit un autre dispositif d'ancrage de dirigeable à nacelle suspendue, dans lequel il est proposé d'ancrer le dirigeable à l'aide de câbles fixés sur le haut de l'enveloppe, au lieu d'utiliser la technique de câbles fixés dans le plan médian du ballon. Il est proposé, dans ce document, de fixer le ballon de telle sorte que les câbles de suspension de la nacelle soit tendus, ou légèrement détendus.

Enfin, il a déjà été proposé, pour des dirigeables formés d'une nacelle directement fixée sur une enveloppe, d'utiliser le même type d'ancrage: une fois la nacelle posée au sol, l'enveloppe est fixée au sol par des haubans.

Ces différents procédés d'amarrage ont jusqu'à présent donné satisfaction. Les calculs théorique de pénétration dans l'air de la partie gonflable des ballons, et des efforts exercés par le vent sur les ballons ne permettent pas de mettre en évidence de problèmes d'arrimage particulier, même pour des vents importants, pouvant atteindre 100 km/h (27,7 m/s), à supposer bien entendu que les câbles d'amarrage présentent une résistance suffisante. De fait, pour des vents importants, un raisonnement théorique permet d'envisager les mouvements verticaux du ballon: la tension dans les haubans augmente, et si la composante verticale de cette force vient équilibrer la force ascentionnelle du ballon, on prévoit que celui-ci est libre de descendre pour prendre une nouvelle position d'équilibre plus basse. Pour les dirigeables à nacelle suspendue ou fixe, la solution classique est aussi tout à fait satisfaisante, le dirigeable présentant un coefficient de pénétration dans l'air généralement moins élevé que celui d'un ballon sphérique, s'il est orienté dans la direction du vent.

La présente invention se propose donc de résoudre le problème nouveau de l'amarrage de ballons à nacelle suspendue. pour des vents encore plus élevés. Ce problème nouveau n'avait pas été identifié jusqu'à présent. De fait, il existait un préjudice très général quant à la possibilité de laisser des ballons gonflés pour des vents aussi élevés: les ballons étaient systématiquement dégonflés ou mis à l'abri dans des hangars, de sorte que le problème de l'invention n'était tout simplement pas concevable. En outre, l'invention repose sur la constatation surprenante de mouvements de grande ampleur dûs aux phénomènes rabattant provenant de la composante verticale du vent, et à l'effet d'inertie du ballon, dont le raisonnement théorique ne permet pas de rendre compte.

L'invention permet notamment en hiver, d'éviter les opérations longues et fastidieuses de dégonflement et regonflement du ballon, et assure que le ballon reste toujours prêt à fonctionner, après des opérations simples et rapides. Elle permet au ballon amarré de résister à des vents importants, et notamment à des vents ayant une vitesse supérieure à 20 m/s, sans risque de casse pour le ballon

Ce but est atteint par le procédé de l'invention qui permet d'amarrer au sol un ballon à nacelle suspendue, avec une étape d'amenée de la nacelle au sol, une étape de descente de l'enveloppe au contact de la nacelle, et une étape de fixation de l'enveloppe au sol, tout en la maintenant au contact de la nacelle. L'étape de descente et l'étape de fixation peuvent être confondues; toutefois, comme expliquées plus bas, elle peuvent aussi être distinctes.

Grâce au procédé de l'invention, l'enveloppe du ballon est constamment maintenue en appui contre la nacelle. Lorsque cette enveloppe est soumise à un vent latéral, les moyens d'amarrage, tels que des haubans, exercent sur cette enveloppe une force de traction dont la composante horizontale s'oppose à la pression latérale du vent, et dont la composante verticale accentue la pression exercée par l'enveloppe sur la nacelle, ce qui par là-même engendre de la part de la nacelle une force de réaction opposée sur l'enveloppe. L'enveloppe reste donc immobile.

Dans une première variante de réalisation de l'invention, préalablement à la descente de l'enveloppe, on positionne sur la nacelle, un ou plusieurs éléments de protection, qui ont pour fonction principale d'amortir et de répartir les efforts qu'exerce la nacelle sur l'enveloppe du ballon. Il s'agira par exemple d'éléments de protection gonflables, pouvant se présenter sous la forme de plots.

Dans une seconde variante de réalisation de l'invention, après avoir amené l'enveloppe au contact de la nacelle, et préalablement à l'étape de fixation au sol de cette enveloppe au moyen des haubans, on fixe l'enveloppe au soi par des moyens de liaison supplémentaires exerçant sur l'enveloppe une force de traction verticale, qui s'oppose à la force ascensionnelle de l'enveloppe. Ces moyens de liaison permettent avantageusement d'exercer sur l'enveloppe une force de traction supplémentaire, qui vient s'ajouter à la composante verticale de la traction exercée par les haubans, ce qui renforce la stabilité verticale de l'enveloppe. De plus, ils permettent également de maintenir constamment l'enveloppe au contact de la nacelle, pendant l'ultime étape de fixation au sol de l'enveloppe au moyens des haubans.

De préférence, l'enveloppe du ballon étant emprisonnée dans un filet, on fixe les mailles inférieures du filet au sol, lequel filet fait ainsi avantageusement office de moyens de liaison.

Dans une variante préférée de réalisation, on combinera les deux variantes particulières précitées, afin d'obtenir un amarrage optimum du ballon.

D'autres caractéristiques et avantages de l'invention apparaîtront plus clairement à lecture de la description suivante du procédé d'amarrage d'un ballon captif, selon une variante préférée de l'invention, laquelle description est donnée à titre d'exemple non limitatif et en référence au dessin annexé sur lequel :
- la figure 1 est une vue générale d'un ballon captif dont la nacelle est posée au sol et dont l'enveloppe est prête à être descendue vers la nacelle au contact de plots de protection gonflables montés sur la partie supérieure de la nacelle,
- la figure 2 est une vue schématique du ballon captif de la figure 1 une fois arrimé au sol, qui permet d'illustrer les différentes forces qui s'exercent sur l'enveloppe du ballon.

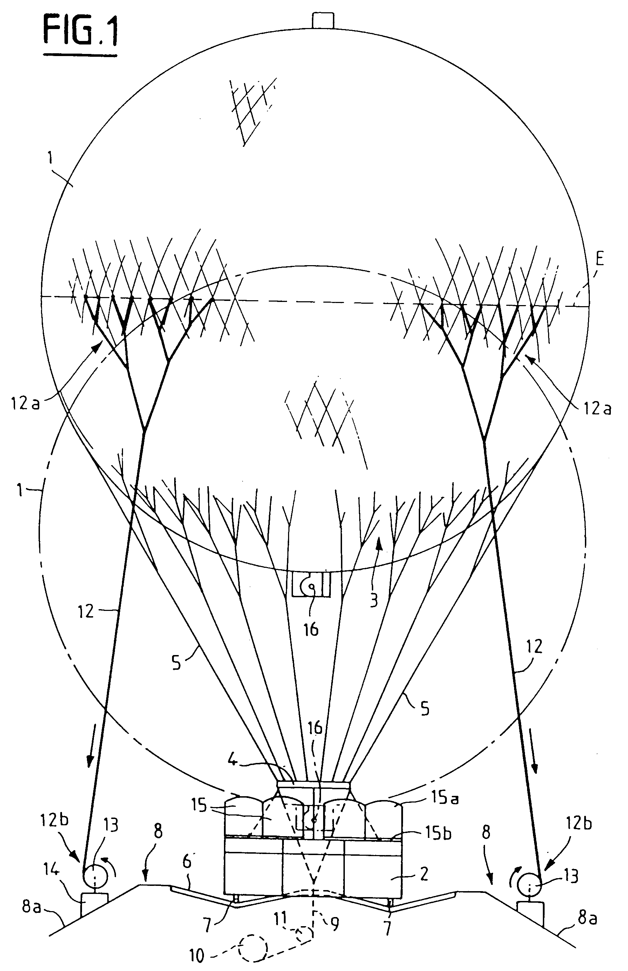

Le ballon captif représenté à la figure 1 comprend une enveloppe sphérique 1 gonflée avec un gaz plus léger que l'air et une nacelle 2 suspendue à l'enveloppe, dans laquelle des passagers peuvent être embarqués. L'enveloppe 1 est emprisonnée dans un filet 3, qui est relié à un cadre de charge 4 par l'intermédiaire d'une pluralité de suspentes 5. La nacelle 2 est quant à elle suspendue au cadre de charge 4. Dans, l'exemple illustré la nacelle 2 repose sur une plate-forme d'atterrissage 6 par l'intermédiaire de roues 7, ladite plate-forme d'atterrissage étant installée au sommet d'un remblais 8. De manière connue, le ballon captif est ramené au sol au moyen d'un câble de rappel 9, dont une extrémité est solidaire du cadre de charge 4, et dont l'autre extrémité s'enroule sur un treuil 10 par l'intermédiaire d'une poulie de renvoi 11, le treuil 10 et la poulie de renvoi 11 étant situés sous la plate-forme 6. La structure particulière de la plate-forme 6 et le procédé pour faire atterrir le ballon captif sur cette plate-forne ont déjà été décrits dans la demande de brevet français FR-A-2 714 019, et ne seront donc pas détaillés dans la présente description.

Le filet 3 du ballon de la figure 1 est en outre équipé d'une pluralité de haubans 12, qui sont fixés à demeure par leur extrémité supérieure 12a sur les mailles du filet 3 en étant régulièrement répartis sur toute la périphérie de l'enveloppe 1, au niveau de son équateur E symbolisé sur la figure 1 par une ligne en pointillés. Par souci de simplification, sur la figure 1, on a représenté uniquement deux haubans 12.

Les extrémités inférieures 12b des deux haubans 12 de la figure 1 sont enroulées sur des treuils de rappel 13, qui sont fixés respectivement sur des plots 14, ancrés dans le sol au niveau de la pente 8a du remblais 8.

Dans un exemple précis de réalisation, un hauban 12 sur deux était treuillé, les autres haubans étant fixés au sol sur leurs plots d'ancrage usuels.

Sur la partie supérieure de la nacelle 2 est fixée une pluralité de plots de protection gonflables 15. Ces plots 15 consisteront par exemple en une enveloppe gonflable sensiblement cylindrique 15a fixée à la surface d'une plaque support 15b, laquelle plaque support est fixée de manière amovible par tout moyen approprié sur la nacelle 2.

Dans un exemple précis de réalisation, la nacelle 2 avait une forme octogonale, et était équipée de huit plots de protection 15, fixés respectivement au niveau des angles de la nacelle à section octogonale. Sur la figure 1, seuls quatre de ces huit plots à l'état gonflé sont visibles. Sur le filet 3 étaient fixés vingt-quatre haubans 12, et douze treuils 13 étaient répartis régulièrement sur toute la périphérie de la plate-forme d'atterrissage 6.

Conformément à une variante préférée de l'invention, les opérations d'amarrage du ballon de la figure 1 sont réalisées dans l'ordre suivant.

Une fois la nacelle 2 posée sur la plate-forme 6, on positionne l'extrémité libre 12b d'un hauban 12 sur deux sur les treuils de rappel 13; les haubans restants sont ancrés sur leur plots d'ancrage habituels; puis on gonfle les plots de protection 15. Avantageusement, les enveloppes 15a des plots 15 seront reliées entre elles, par paire, au moyen de canalisations (non représentées). Pour chaque paire de plots de protection 1 5, un seul des deux plots sera équipé d'un ventilateur (non représenté) permettant de gonfler simultanément les deux enveloppes 15a des deux plots.

Une fois les plots de protection gonflés, on entraîne en rotation les treuils de rappel 13 en sorte d'enrouler les haubans 12 correspondants, ce qui permet d'exercer une traction sur le filet 3 et de faire descendre l'enveloppe 1 vers la nacelle 2. Simultanément, on tire sur les haubans non treuillés, de façon à garder l'enveloppe du ballon constamment haubanée pendant toute la descente. Les suspentes 5 qui étaient initialement tendues par l'enveloppe 1 en sustentation se détendent. Le fait de tirer sur les haubans non treuillés pendant l'étape de descente du ballon au contact de la nacelle permet de garder le ballon centré. Dans la pratique, ces haubans peuvent être partiellement remplacés par des câbles métalliques qui sont mis en tension au cours de la descente au moyen de tire-forts.

Lorsque l'enveloppe 1 du ballon arrive au contact des plots de protection 15, on bloque en rotation les trcuils 13. L'enveloppe 1 du ballon qui se trouve dans la position illustrée en pointillés sur la figure 1, s'appuie sur la nacelle 2, par l'intermédiaire des plots de protection 15, qui amortissent et répartissent les efforts. Le ventilateur 16 de l'enveloppe 1 du ballon vient avantageusement se loger au centre des plots 1 5. Il convient de souligner que dans une autre variante, les plots de protection 15 pourraient être gonflés, non pas préalablement à la descente de l'enveloppe 1, mais seulement après que cette enveloppe ait été amenée à proximité de la nacelle.

Une fois l'enveloppe 1 maintenue au contact des plots de protection 15, les suspentes 5 sont totalement détendues, et les mailles inférieures du filet 3 arrivent à proximité du remblais 8. Un fixe alors par tout moyen approprié connu de l'homme du métier les mailles inférieures du filet au sol, directement ou par l'intermédiaire d'élingues. Prévoir des élingues de longueur réglable permet de régler la position exacte de l'enveloppe par rapport à la nacelle, en fonction de la cote des points d'accrochage. Dans un exemple précis de réalisation, le filet 3 comportait quarante-huit mailles inférieures ; douze plots en béton supplémentaires (non représentés), équipé chacun de deux crochets d'amarrage, étaient intercalés entre les plots 14, et les plots 14 étaient en outre équipés chacun de deux crochets d'amarrage (non représentés) en plus du treuil 13 ; les quarante-huit mailles inférieures du filet 3 étaient fixées directement sur les quarante-huit crochets d'amarrage de l'ensemble des plots béton. Une fois le filet 3 fixé directement au sol, on inverse le sens de rotation des treuils 13, en sorte de relâcher les haubans 12, et ce jusqu'à ce que l'extrémité 12b de ces haubans soit libre. L'enveloppe 3 reste maintenue au contact des plots de protection 15, par l'intermédiaire de son filet 3 fixé au sol. Enfin, dans une ultime étape de fixation, on fixe au sol l'extrémité 12b de l'ensemble des haubans 12, y compris ceux qui étaient enroulés sur les treuils de rappel 13, de telle sorte que ces haubans soient tendus.

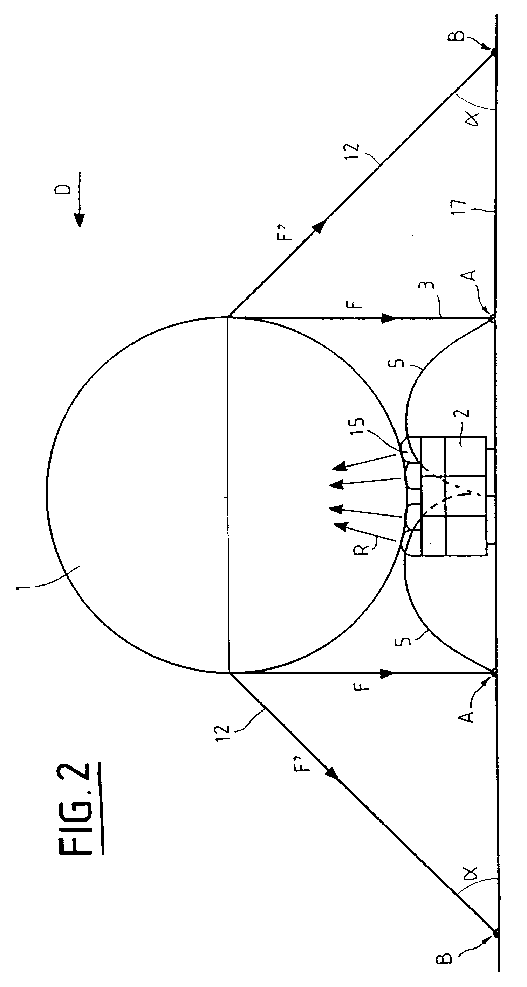

On a représenté à la figure 2 de manière schématique le ballon de la figure 1 une fois celui-ci amarré au sol conformément au procédé qui vient d'être décrit. Par souci de simplification, sur la figure 2 la plate-forme d'atterrissage n'a pas été représentée et le sol a été symbolisé par un simple trait horizontal 17.

Dans la position d'amarrage de la figure 2, le filet 3 de l'enveloppe 1 du ballon est fixé directement sur le sol aux points A. Les haubans 12 sont fixés au sol aux points B, en faisant un angle α par rapport à l'horizontale.

L'enveloppe 1 étant plus légère que l'air, celle-ci a tendance à s'élever dans les airs, mais est maintenue à une hauteur constante du sol 17 par son filet 3, qui est tendu et exerce sur l'enveloppe des forces de rappel verticales F. Lorsque l'enveloppe 1 subit, sous l'effet du vent, une poussée latérale illustrée sur la figure 2 par la flèche D, cette enveloppe a tendance à être ramenée vers le sol par la composante verticale de la traction F' qui est exercée sur le filet par les haubans 12. Cette traction se trouve compensée par la force de réaction R qui est exercée par la nacelle 2 par l'intermédiaire des plots de protection 15. L'augmentation de la poussée latérale exercée par le vent se traduit simplement par une augmentation de la force de réaction R exercée par les plots 15 sur l'enveloppe 1, laquelle reste immobile. Les plots de protection 15 permettent d'amortir et de répartir la force de réaction R sur toute la périphérie de l'enveloppe 1 du ballon, et par là-même d'éviter une détérioration de cette enveloppe.

En pratique, pour la mise en oeuvre du procédé d'amarrage de l'invention, on conserve les même points d'ancrage au sol pour les haubans, que ceux qui étaient jusqu'à présent utilisés pour haubaner l'enveloppe en sustentation. Il en résulte d'une part que les haubans d'amarrage sont raccourcis par rapport aux haubans habituellement utilisés, étant donné que l'enveloppe se trouve à une plus faible distance du sol, et d'autre part que l'angle α que font les haubans par rapport à l'horizontale est beaucoup plus faible. Dans un exemple précis de réalisation, cet angle α était d'environ 25° avec le procédé de l'invention, alors qu'il était d'environ 45° avec le procédé de l'état de la technique. Cette diminution de la valeur de l'angle α se traduit, pour une même tension exercée sur les haubans, par une force de traction F' dont la composante verticale est plus faible. L'enveloppe 1 est donc avantageusement plus faiblement rabattue au sol par les haubans sous l'effet du vent.

Grâce à l'invention. le ballon peut ainsi résister à des vents importants, et notamment à des vents présentant en pratique une vitesse supérieure à 20 m/s, sans que l'enveloppe 1 soit mise en mouvement et donc sans risque de détérioration du ballon, qui reste parfaitement amarré au sol. Un ballon de 22 m de diamètre équipé selon l'invention a supporté des vents de 26 m/s, et des essais en soufflerie montrent que l'invention permet à un ballon de suporter des vents allant jusqu'à 33 m/s.

Divers modes de réalisation particuliers de l'invention améliorent encore l'arrimage du ballon. Pour encore limiter les mouvements de l'enveloppe, au niveau de la nacelle, on peut prévoir des moyens d'arrimage de la partie inférieure de l'enveloppe ou pôle sud. Ceci est d'autant plus avantageux que l'enveloppe présente dans cette zone des éléments sensibles et de sécurité, tels que clapets et ventilateur de pressurisation. En outre, on évite ainsi une usure de l'enveloppe par glissement sur les plots de protection, ou même des dommages à l'enveloppe si elle venait au contact du sol ou de la nacelle. On peut utiliser divers types de tels moyens d'arrimage. Dans un mode de réalisation, ces moyens d'arrimage comprennent des suspentes reliant la partie inférieure de l'enveloppe à la nacelle ou au sol. Ces suspentes peuvent être fixées du côté de l'enveloppe sur un renfort spécialement conçu, par exemple une couronne métallique, prenant l'enveloppe en sandwich sur toute sa surface. A leur autre extrémité, les suspentes peuvent être attachés à la nacelle, ou directement au sol. On prévoit avantageusement des moyens de mise sous tension, par exemple des tendeurs à cliquet. On peut prévoir des suspentes fixées en position oblique, et aussi des suspentes fixées en position verticale, de sorte à éviter non seulement les mouvements latéraux, mais aussi les mouvements verticaux de la partie inférieure de l'enveloppe. Si les suspentes sont reliées à la nacelle, on fixe avantageusement aussi la nacelle par rapport au sol en utilisant des élingues, par exemple tendues entre la nacelle et les plots 14.

Pour améliorer la tenue des plots de protection disposés entre la nacelle et l'enveloppe du ballon, on peut prévoir des moyens de liaison entre les plots, par exemple, dans le cas de plots sensiblement verticaux régulièrement espacés sur la périphérie de la nacelle, une ceinture qui relie les plots entre eux non loin de leur sommet. On évite ainsi tout risque que les plots s'écartent vers l'extérieur de la nacelle, et se retrouvent poussés vers l'extérieur sous l'effet des efforts exercés par le ballon. On peut alors procéder à l'arrimage de la partie inférieure de l'enveloppe après sa descente au contact de la nacelle, au cours de l'étape de fixation, ou avant ou après celle-ci.

On peut aussi améliorer encore la tenue du ballon en munissant le filet retenant l'enveloppe d'une ceinture équatoriale permettant d'éviter les déformation du filet. De fait, les filets généralement utilisés sont composés de mailles en losange, et sont fermés au sommet ou pôle nord par une couronne, et en bas ou au pôle sud par un cercle de charge auquel la nacelle est suspendue. Les mailles du filet peuvent alors de déformer, et notamment, lorsque l'on exerce une traction latérale sur un tel filet au niveau de l'équateur, le diamètre du filet augmente et sa hauteur diminue. Le filet s'écarte alors de l'enveloppe et l'enveloppe est alors libre de se déplacer latéralement dans le filet. Pour limiter ces déformation du filet, on peut avantageusement prévoir des moyens limitant la déformation du filet au niveau de l'équateur, ou plus généralement au niveau où sont fixés les haubans. On peut utiliser comme tels moyens une ceinture équatoriale formée d'une corde nouée aux mailles du filet à l'équateur, qui limite les déformations du filet, et le maintient autour de l'enveloppe, même en cas d'efforts de traction importants. Ces moyens sont particulièrement avantageux lorsque l'enveloppe est au contact de la nacelle, car les efforts latéraux exercés sur le filet sont plus importants que lorsque l'enveloppe est en position haute, l'angle formé entre les haubans et le sol étant plus faible en position basse. En outre, il est d'autant plus important d'éviter les mouvement latéraux que l'enveloppe se trouve au voisinage du sol.

L'invention n'est pas limitée au procédé particulier qui vient d'être décrit en référence aux figures 1 et 2. Les éléments de protection ne sont pas nécessairement gonflables et n'ont pas nécessairement la forme de plots. Ils pourraient être par exemple remplacés par un boudin de mousse ayant une forme adaptée pour permettre de supporter l'enveloppe du ballon sur la nacelle. La traction exercée sur les haubans 12 pour amener l'enveloppe du ballon au contact de la nacelle pourra être exercée par tout moyen approprié, autre que les treuils 13. Enfin, le procédé de l'invention n'est pas limité à l'amarrage d'un ballon captif mais pourra être utilisé pour fixer solidement au sol également un ballon libre permettant de transporter des passagers d'un point géographique à un autre. Le procédé de l'invention peut s'appliquer à tous les ballons à gaz, air chaud, ou mixte (air chaud et gaz), pour lesquels l'enveloppe du ballon est plus légère que l'air, ainsi qu'aux dirigeables à nacelles suspendues. Le procédé de l'invention peut également s'étendre aux ballons dont l'enveloppe n'est pas emprisonnée dans un filet. Dans ce cas, l'opération de fixation au sol des mailles inférieures du filet sera remplacée par tout moyen de fixation au sol de l'enveloppe remplissant la même fonction, c'est-à- dire en fixant au sol l'enveloppe par tout moyen de liaison à la portée de l'homme du métier et permettant d'exercer sur l'enveloppe une force de rappel F verticale, qui s'oppose à la force ascensionnelle de l'enveloppe. Il s'agira par exemple de cordes supplémentaires dont une première extrémité sera fixée directement sur l'enveloppe au niveau de son tropique inférieur, ou ailleurs, et dont la seconde extrémité sera fixée au sol de telle sorte que ces cordes supplémentaires soient tendues en étant sensiblement verticales. Enfin, on a décrit l'invention dans le cas de 24 haubans équatoriaux, un hauban sur deux servant à descendre l'enveloppe, et le reste des haubans étant avantageusement utilisé pour assurer le centrage de l'enveloppe au cours de la descente. On peut faire varier le nombre de haubans, et par exemple en prévoir 16 ou 24, dont 8 seraient utilisés pour assurer la descente de l'enveloppe.

On pourrait aussi utiliser une étape de descente et une étape de fixation communes, par exemple en bloquant simplement les treuils en rotation après avoir descendu l'enveloppe, de sorte à fixer l'enveloppe. On pourrait aussi utiliser comme moyens de descente un hauban sur deux, et comme moyens de fixation le reste des haubans.

L'utilisation de l'invention par le demandeur a rencontré un très grand succès commercial, en permettant de généraliser l'emploi des ballons captifs. Des ballons captifs à nacelle suspendue munis de systèmes d'amarrage selon l'invention ont été vendus en Australie, en Allemagne, en Chine, et en France. L'invention a permis d'installer des ballons captifs, même sur des sites présentant des vents très importants, en évitant de devoir toujours procéder au dégonflage de l'enveloppe.

L'invention permet d'éviter ce qui se serait produit avec les procédés d'amarrage de l'art antérieur: lorsque l'enveloppe est soumise à un vent latéral, les haubans se tendent et exercent des forces de traction sur l'enveloppe qui empêchent les mouvements latéraux de l'enveloppe. Toutefois, pour des vents très élevés, pour lesquels on dégonflait toujours les ballons avant l'invention, l'enveloppe subit des mouvements verticaux successifs de descente et montée, les suspentes du ballon et une partie des haubans se détendant puis se tendant à nouveau, sous l'action du vent. L'enveloppe peut alors se trouver très proche de la nacelle ou du sol, voire même toucher le sol.

## Revendications

1. Procédé d'amarrage au sol d'un ballon à nacelle suspendue, présentant une nacelle (2) suspendue à une enveloppe de sustentation (1), comprenant une étape d'amenée de la nacelle au sol, une étape de descente de l'enveloppe au contact de la nacelle, et une étape de fixation de l'enveloppe (1) au sol, tout en la maintenant au contact de la nacelle (2).

2. Procédé selon la revendication 1 caractérisé en ce qu'il comprend préalablement à l'étape de descente de l'enveloppe. une étape de positionnement entre la nacelle (2) et l'enveloppe (1), d'un ou plusieurs éléments de protection.

3. Procédé selon la revendication 2 caractérisé en ce que le ou les éléments de protection sont gonflables, et sont gonflés soit préalablement à la descente de l'enveloppe, soit une fois que l'enveloppe a été amenée au contact de la nacelle.

4. Procédé selon la revendication 2 ou 3 caractérisé en ce que les éléments de protection comprennent des plots de protection (15), que l'on dispose sur la périphérie de la nacelle, et qui sont de préférence reliés entre eux par des moyens de liaison tels une ceinture.

5. Procédé selon l'une des revendications 1 à 4 caractérisé en ce que l'enveloppe (1) comprend des haubans d'amarrage (12) répartis sur toute la périphérie de l'enveloppe, en ce que l'étape de descente et l'étape de fixation s'effectue grâce aux haubans, le procédé comprenant en outre avant l'étape de fixation, une étape de maintien de l'enveloppe au sol par des moyens de liaisons (3).

6. Procédé selon la revendication 5 caractérisé en ce que les moyens de liaisons (3) comprennent un filet dans lequel l'enveloppe (1) du ballon est emprisonnée, et en ce que l'étape de maintien comprend la fixation au sol des mailles inférieures du filet (3) sur toute la périphérie de l'enveloppe (1).

7. Procédé selon la revendication 5 ou 6, caractérisé en ce qu'il comprend, après l'étape de maintien, on relâche la tension des haubans (12) utilisés dans l'étape de descente afin de les utiliser pour l'étape de fixation.

8. Procédé selon l'une des revendications 1 à 7, caractérisé en ce que l'enveloppe (1) comprend des haubans d'amarrage (12), de préférence fixés à demeure sur l'enveloppe (1), et en ce que l'étape de descente consiste à exercer une traction sur l'enveloppe au moyen de tout ou partie des haubans d'amarrage (12).

9. Procédé selon la revendication 8 caractérisé en ce que l'on exerce une traction sur l'enveloppe en enroulant l'extrémité libre (12b) des haubans d'amarrage (12) sur des treuils de rappel (13) fixés au sol.

10. Procédé selon l'une des revendications 1 à 9, dans lequel l'étape de fixation comprend l'arrimage de la partie inférieure de l'enveloppe à la nacelle ou au sol.

11. Infrastructure au sol pour l'amarrage de ballons à nacelle suspendue, présentant une nacelle (2) suspendue à une enveloppe de sustentation (1), comprenant des moyens de descente de l'enveloppe au contact de la nacelle, lesdits moyens étant ancrés au sol.

12. Infrastructure selon la revendication 11, comprenant en outre des moyens de fixation de l'enveloppe (1) au sol en la maintenant au contact de la nacelle (2).

13. Infrastructure selon la revendication 11 ou 12, dans laquelle les moyens de descente présentent une pluralité de treuils (13) ancrés au sol autour de la zone d'atterrissage de la nacelle (2).

14. Infrastructure selon la revendication 11, 12 ou 13, dans laquelle les moyens de fixation présentent une pluralité de crochets d'amarrage répartis sur la périphérie de la zone d'atterrissage du ballon.

15. Ballon à nacelle suspendue, présentant une nacelle (2) suspendue à une enveloppe de sustentation (1), par l'intermédiaire d'un filet (3) emprisonnant l'enveloppe, sur lequel filet sont fixés des haubans d'arrimage (12), ledit filet étant muni de moyens de limitation de la déformation du filet au niveau des points de fixation des haubans.

16. Ballon selon la revendication 15, comprenant en outre un ou plusieurs éléments de protection gonflables (15) fixés sur la partie supérieure de la nacelle.

## Claims

1. A method for mooring a suspended-basket balloon to the ground, said balloon having a basket (2) suspeneded from a casing providing lift (1), the method comprising a step of bringing the basket to the ground, a step of descending the balloon casing to bring it into contact with the basket, and a step of seuring the casing (1) to the ground, while keeping said casing in contact with the basket (2).

2. The method of claim 1, characterized in that it comprises, before the step of descending the balloon casing, the step of positioning between the basket (2) and the casing (1), one or a plurality of protective elements.

3. The method of claim 2, characterized in that said protective element or plurality of protective elements are inflatable, and are inflated either prior to the step of descending the casing, or once the casing has been brought into contact with the basket.

4. The method according to claim 2 or 3, characterized in that said protective elements consist of stud-like members (15) that are disposed on a periphery of the basket and are preferably linked together by linking means such as a belt.

5. The method according to one of claims 1 to 4, characterized in that the casing (1) comprises mooring guy lines distributed over the periphery of the casing, in the the descending and securing step are carried out using the guy lines, the method further comprising, prior to the securing step, a step in which the casing is kept at the ground by linking means (3).

6. The method acoding to claim 5, characterized n that the linking means (3) comprise a net in which the balloon casing (1) is entrapped, and in that said maintaining step comprises fixing the lower meshes (3) of said net to the ground all around the periphery of said casing (1).

7. The method according to claim 5 or 6, characterized in that it comprises, after said maintaining step, the step of releasing the tension in the guy lines (12) used in the descending step in order to use them in the securing step.

8. The method according to one of claims 1 to 7, characterized in that said casing (1) comprises mooring guy lines (12), preferably permanently fixed on said balloon casing (1), and in that said step of descending comprises exercising a tractional force on said balloon casing by all or a part of said mooring guy lines (12).

9. The method according to claim 8, characterized in that a tractional force is exercised on said casing by winding a free end (12b) of said mooring guy lines (12) onto recall winches (13) fixed to the ground.

10. The method according to one of claims 1 to 9 in which the securing step comprises mooring the lower portion of the casing to the basket or to the ground.

11. A ground infrastructure for mooring a suspended-basket balloon, said balloon comprising a basket (2) suspeneded from a casing (1) providing lift comprising means for descending said balloon casing to bring it into contact with the basket, said means being anchored to the ground.

12. The infrastructure acording to claim 11, further comprising means for fixing the casing (1) to the ground, while keeping said casing in contact with the basket (2).

13. An infrastructure according to claim 11 or 12, characterized in that said means for descending the balloon have a plurality of winches (13) anchored to the ground around a basket (2) landing region.

14. An infrastructure according to claim 11, 12 or 13 in which said means for fixing the casing to the ground comprise a plurality of mooring hooks distributed over all a periphery of the balloon landing region.

15. A suspended-basket balloon having a basket (2) suspended from a sustaining casing (1) via a net (3) entrapping said casing and on which mooring guys (12) are fixed, said net being provided with means for limiting deformation of the net at the point where said guys are attached.

16. A balloon acording to claim 15, further comprising one or several inflatable protective elements (15) that are fixed to the upper part of the basket.

## Patentansprüche

1. Verfahren um einen Ballon mit hängender Gondel am Boden zu verzurren, wobei der Ballon eine Gondel (2) aufweist, die an einer Auftriebshülle (1) aufgehängt ist, wobei das Verfahren die Schritte umfaßt: Bringen der Gondel zum Boden; Absenken der Hülle, um diese mit der Gondel in Berührung zu bringen; und Befestigen der Hülle 1 am Boden, wobei die Berührung mit der Gondel 2 aufrechterhalten wird.

2. Verfahren nach Anspruch 1, **dadurch gekennzeichnet, daß** vor dem Schritt des Absenkens der Hülle ein oder mehrere Schutzelemente zwischen der Gondel 2 und der Hülle 1 angeordnet werden.

3. Verfahren nach Anspruch 2, **dadurch gekennzeichnet, daß** das oder die Schutzelemente aufblasbar sind und entweder vor dem Absenken der Hülle aufgeblasen werden oder wenn die Hülle mit der Gondel in Berührung gebracht wurde.

4. Verfahren nach Anspruch 2 oder 3, **dadurch gekennzeichnet, daß** die Schutzelemente Schutzauflagen (15) umfassen, die an der Peripherie der Gondel angeordnet sind, und welche bevorzugt miteinander über eine Verbindungseinrichtung, wie zum Beispiel einen Gurt verwunden sind.

5. Verfahren nach einem der Ansprüche 1 bis 4, **dadurch gekennzeichnet, daß** die Hülle (1) Festzurrhaltetaue (12) umfaßt, welche über die gesamte Peripherie der Hülle verteilt sind und daß der Schritt des Absenkens und der Schritt des Befestigens mittels der Haltetaue erfolgt, wobei das Verfahren ferner vor dem Schritt des Befestigens einen Schritt des Beibehaltens der Hülle am Boden über Verbindungsmittel (3) umfaßt.

6. Verfahren nach Anspruch 5, **dadurch gekennzeichnet, daß** die Verbindungsmittel (3) ein Netz umfassen, in welchem die Hülle (1) des Ballons eingefaßt ist und daß der Schritt des Beibehaltens die Befestigung am Boden von unteren Maschen des Netzes (3) an der gesamten Peripherie der Hülle (1) umfaßt.

7. Verfahren nach Anspruch 5 oder 6, **dadurch gekennzeichnet, daß** nach dem Schritt des Beibehaltens der Zug bzw. die Spannung der Haltetaue (2), verwendet in dem Schritt des Absenkens gelöst wird, um diese für den Schritt der Befestigung zu verwenden.

8. Verfahren nach einem der Ansprüche 1 bis 7, **dadurch gekennzeichnet, daß** die Hülle (1) Verzurrhaltetaue (12) umfaßt, bevorzugt ortsfest an der Hülle (1) vorgesehen, und daß der Schritt des Absenkens darin besteht, daß ein Zug auf die Hülle mittels sämtlicher oder eines Teiles der Verzurrhaltetaue bzw. -seile (12) ausgeübt wird.

9. Verfahren nach Anspruch 8, dadurch gekennzeichnet, daß Zug auf die Hülle ausgeübt wird, indem das freie Ende (12b) der Verzurrhaltetaue (12) auf Rückholwinden (13) aufgerollt bzw. aufgewickelt wird, die am Boden befestigt sind.

10. Verfahren nach einem der Ansprüche 1 bis 9, in welchen der Schritt der Befestigung das Verzurren des unteren Teiles der Hülle an der Gondel oder am Boden umfaßt.

11. Bodenseitige Infrastruktur zur Verzurrung von Ballonen mit hängender Gondel, die eine Gondel (2) umfassen, welche an einer Auftriebshülle (1) aufgehängt ist, umfassend Mittel, um die Hülle abzusenken und mit der Gondel in Kontakt bzw. Berührung zu bringen, wobei die Mittel am Boden verankert sind.

12. Infrastruktur nach Anspruch 11, ferner umfassend, Mittel zur Befestigung der Hülle (1) am Boden, wobei die Berührung bzw. der Kontakt mit der Gondel (2) aufrechterhalten wird.

13. Infrastruktur nach Anspruch 11 oder 12, in welcher die Mittel zum Absenken eine Vielzahl von Winden (13) umfassen, die am Boden befestigt sind, und zwar herum um die Landezone der Gondel.

14. Infrastruktur nach Anspruch 11, 12 oder 13, in welcher die Befestigungsmittel eine Vielzahl von Verzurrhaken aufweisen, welche bezüglich der Peripherie der Landezone des Ballons verteilt sind.

15. Ballon mit hängender Gondel, umfassend eine Gondel (2), die an einer Auftriebshülle (1) aufgehängt ist und zwar mittels eines Netzes (3), welches die Hülle einfaßt, an welchem Netzverzurrhaltetaue (12) befestigt sind, wobei das Netz mit Beschränkungsmitteln für die Verformung des Netzes auf Höhe der Befestigungspurkte der Haltetaue versehen ist.

16. Ballon nach Anspruch 15, ferner umfassend, ein oder mehrere aufblasbare Schutzelemente (15), die an dem oberen Teil der Gondel befestigt sind.
